(19) Europäisches Patentamt / European Patent Office / Office européen des brevets

(11) **EP 4 671 964 A1**

(12) **DEMANDE DE BREVET EUROPEEN**

(43) Date de publication:
**31.12.2025 Bulletin 2026/01**

(21) Numéro de dépôt: **25184521.0**

(22) Date de dépôt: **23.06.2025**

(51) Classification Internationale des Brevets (IPC):
**G06F 7/58** *(2006.01)*

(52) Classification Coopérative des Brevets (CPC):
**G06F 7/588**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **25.06.2024 FR 2406833**

(71) Demandeur: **Commissariat à l'Energie Atomique et aux Energies Alternatives
75015 Paris (FR)**

(72) Inventeurs:
• **PEBAY-PEYROULA, Florian
38054 GRENOBLE CEDEX 09 (FR)**
• **BENEA, Licinius-Pompiliu
38054 GRENOBLE CEDEX 09 (FR)**

(74) Mandataire: **Cabinet Beaumont
4, Place Robert Schuman
B.P. 1529
38025 Grenoble Cedex 1 (FR)**

(54) **CIRCUIT DE GENERATION DE NOMBRES ALEATOIRES**

(57)  La présente description concerne un circuit (3). Des premier et deuxième oscillateurs en anneau (R1, R0) identiques fournissent des premier et deuxième signaux périodiques (S1, S0). Une bascule (102) échantillonne le premier signal (S1) au début de chaque période du deuxième signal (S0). Un compteur (COUNTER) est cadencé par le deuxième signal (S0). Un circuit (GM) de gestion des métastabilités supprime des valeurs de sortie (N) du compteur issues de métastabilités de la première bascule (102), et réinitialise le compteur (COUNTER) à chaque front montant et/ou à chaque front descendant d'une sortie (Beat) de la première bascule (102).

Fig 3

EP 4 671 964 A1

**Description**

<u>Domaine technique</u>

La présente description concerne de façon générale les circuits électroniques, et, plus particulièrement, un circuit de génération de nombres aléatoires.

<u>Technique antérieure</u>

Un circuit de génération de nombre aléatoire utilise une source d'entropie pour générer des nombres aléatoires, par exemple pour générer un bit d'un nombre aléatoire.

Des sources d'entropie connues sont basées sur les métastabilités qui peuvent se produire dans une bascule ("flip flop" en anglais), par exemple une bascule de type D ("D flip flop en anglais"), lorsqu'un signal échantillonné par la bascule présente un front, c'est dire un changement de valeur binaire, qui est trop proche d'un front d'un signal de cadencement qui déclenche l'échantillonnage.

D'autres sources d'entropie connues sont basées sur la gigue ("jitter" en anglais) des oscillateurs en anneau. C'est par exemple le cas des circuits de génération de nombres aléatoires de type à échantillonnage cohérent d'oscillateur en anneau désigné par le sigle "COSO TRNG" (de l'anglais "COherent Sampling ring Oscillator based True Random Number Generation" - générateur de vrai nombres aléatoires basé sur l'échantillonnage cohérent d'oscillateur en anneau).

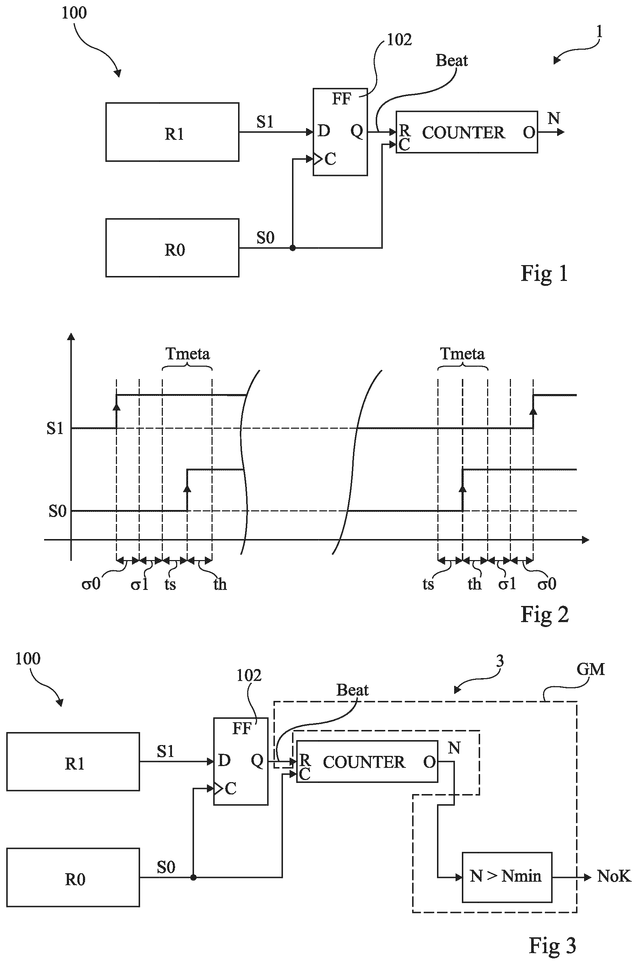

La figure 1 représente un exemple d'un circuit 1 de génération de nombre aléatoire de type à échantillonnage cohérent d'oscillateur en anneau. La figure 1 représente plus particulièrement une partie d'un circuit de génération de nombre aléatoire de type COSO, les éléments permettant de produire un bit aléatoire à partir de valeur N de sortie d'un compteur n'étant pas illustrés.

Le circuit 1 comprend deux oscillateurs en anneau identiques R1 et R0. L'oscillateur R1, respectivement R0, fournit un signal périodique de sortie S1, respectivement S0. Le signal S1, respectivement S0, a une période T1, respectivement T0. En particulier, comme les oscillateurs R0 et R1 sont identiques, les périodes T1 et T2 sont similaires, ou, dit autrement, le rapport entre les fréquences des deux oscillateurs R0 et R1 est, par exemple, inférieur 1,5.

Le circuit 1 comprend en outre une bascule synchrone 102 (FF de l'anglais "flip-flop"), par exemple de type D ("D flip-flop" en anglais). La bascule 102 est configurée pour échantillonner le signal S1 à la fréquence du signal S0.

Dit autrement, la bascule 102 est configurée pour mettre à jour un signal de sortie Beat à chaque début de période du signal S0 avec la valeur binaire du signal S1, chaque début de période du signal S0 correspondant à un front actif du signal S0, par exemple un front montant. Entre deux mises à jour successives du signal Beat, le signal Beat est maintenu à sa valeur courante, c'est à dire la valeur prise par le signal Beat lors de la première des deux mises à jour successives.

Par exemple, la bascule 102 comprend une entrée D de donnée configurée pour recevoir le signal S1, une entrée CK de synchronisation (cadencement) des mises à jour du signal Beat configurée pour recevoir le signal S0, et une sortie Q configurée pour fournir le signal Beat.

Les deux oscillateurs R1 et R0 et la bascule 102 forment une source d'entropie 100. L'aléa extrait de la source d'entropie 100 est généré à partir de la valeur de la période T du signal Beat. Le signal Beat est un signal périodique ayant une période moyenne Tm dont la durée moyenne Nm en nombre de période du signal S0 est inversement proportionnelle à la différence entre les périodes T1 et T0, selon la formule Nm = T1/(T1-T0). Le signal Beat a une période instantanée T qui varie avec la gigue du signal S1. Ainsi, la mesure de la période T, c'est à dire de la durée de la période T, est représentative de la gigue du signal S1.

Le signal Beat est dit représentatif de la phase entre les signaux S1 et S0 par exemple car il prend une première valeur binaire, respectivement une deuxième valeur binaire, tant que la phase entre les signaux S1 et S0 est telle que chaque front actif du signal S0 se produit alors que le signal S1 est à un premier niveau binaire, respectivement à un deuxième niveau binaire.

Pour mesurer la période T du signal Beat, le circuit 1 comprend un circuit (ou compteur) COUNTER. Le circuit COUNTER est configuré pour fournir, pour chaque période T du signal Beat, une valeur N, par exemple sous la forme d'un mot numérique, égale au nombre de périodes T0 du signal S0 comptées pendant la période T du signal Beat. Dit autrement, le circuit COUNTER est configuré pour mesurer la durée de chaque période T du signal Beat en nombre N de périodes T0 du signal S0.

A titre d'exemple, le circuit COUNTER comprend une entrée R de remise à zéro recevant le signal Beat, une entrée de synchronisation C recevant le signal S0 et une sortie O fournissant les valeurs N comptées. A chaque début de période T0 du signal S0, par exemple à chaque front montant du signal S0, le circuit COUNTER incrémente la valeur courante de comptage d'une unité. A chaque début de période T du signal Beat, par exemple à chaque front montant du signal Beat, le circuit COUNTER réinitialise la valeur courante de comptage à zéro. De préférence, la valeur N disponible en sortie du circuit COUNTER, sur la sortie O, est mise à jour à partir de la valeur courante de comptage à chaque réinitialisation du compteur COUNTER par le signal Beat, juste avant que cette valeur courante de comptage soit remise à zéro. Dit autrement, la valeur N disponible en sortie du circuit COUNTER est mise à jour à chaque réinitialisation du compteur COUNTER par le signal Beat, avec la valeur du nombre de périodes T0 du signal S0 comptés depuis la réinitialisation précédente, et la valeur N courante de sortie du compteur COUNTER est maintenue jusqu'à la réinitialisation suivante du compteur COUNTER. Dit autrement, de préférence, le compteur COUNTER comprend un registre recevant la valeur courante de comptage comme signal de donnée et le signal Beat comme signal de cadencement, et fournissant la valeur N comme signal de sortie, ce registre étant configuré pour mettre à jour la valeur N à chaque réinitialisation de la valeur courante de comptage, juste avant que cette valeur courante de comptage ne soit remise à zéro.

Bien que cela ne soit pas illustré en figure 1, à titre d'exemple, le circuit 1 comprend en outre un circuit configuré pour commander ou modifier la période d'au moins l'un des deux oscillateurs R1 et R0 de sorte que l'écart entre les périodes T1 et T0 soit égal à un écart cible. La modification de la période T1 de l'oscillateur R1 et/ou de la période T0 de l'oscillateur R0 par ce circuit est, par exemple, mise en œuvre sur la base des valeurs N de sortie du circuit COUNTER. Par exemple, pour une valeur cible Nmt du nombre moyen de Nm de périodes T0 par période T du signal Beat, si la valeur de sortie N est inférieure à Nmt, l'écart entre les périodes T1 et T0 est réduit, et si la valeur de sortie N est supérieure à Nmt, l'écart entre les périodes T1 et T0 est augmenté.

Par exemple, lorsque les deux oscillateurs R1 et R0 sont mis en œuvre en technologie métal-oxyde-semiconducteur complémentaire (CMOS de l'anglais "Complementary Metal Oxide Semiconductor") sur semiconducteur sur isolant (SOI de l'anglais Semiconductor On Insulator"), de préférence sur silicium sur isolant complètement déplété ("Fully Depleted Silicon On Insulator"), la modification de la période T1 de l'oscillateur R1, respectivement de la période T0 de l'oscillateur R0, peut être mise en œuvre en commandant les grilles arrière d'au moins un élément à retard, par exemple un inverseur, de l'oscillateur R1, respectivement R0. Un exemple d'un tel contrôle de l'écart entre les périodes de deux oscillateurs en anneau d'un circuit de génération de nombres aléatoires de type COSO est décrit plus en détail dans la demande de française FR 3 140 968, la demande de brevet européen EP 4 354 279 A1 et la demande de brevet américaine US 2024-0128957 A1.

A titre d'autres exemples, que les oscillateurs R1 et R0 soient ou non mis en œuvre en CMOS sur SOI ou FDSOI, la modification de la période T1 de l'oscillateur R1, respectivement de la période T0 de l'oscillateur R0, est mise en œuvre autrement, par exemple en sélectionnant un chemin de propagation d'une oscillation parmi plusieurs possibles, ou en modifiant les conditions d'alimentations de l'oscillateur. A titre d'exemple, l'article de A. Peetermans, V. Rozic, et I. Verbauwheden intitulé "A Highly-Portable True Random Number Generator Based on Coherent Sampling", publié en 2019 dans 29th International Conference on Field Programmable Logic and Applications (FPL) décrit un autre exemple de réglage des périodes relatives de deux oscillateurs en anneau.

Toutefois, l'utilisation des grilles arrière pour moduler la période d'au moins l'un des oscillateurs R1 et R0 lorsque ceux-ci sont mis en œuvre en CMOS sur SOI ou FDSOI permet une plus grande dynamique de réglage et une meilleure précision de réglage de l'écart entre les périodes T1 et T0.

A titre encore d'autres exemples, le circuit 1 peut être dépourvu de circuit de réglage de l'écart entre les périodes T1 et T0.

Dans le circuit 1, dans chacun des oscillateurs R0 et R1, le rapport R entre la période de l'oscillateur et sa gigue est déterminable et dépend de la technologie de mise en œuvre des oscillateurs. Lorsque les oscillateurs sont mis en œuvre en CMOS sur FDSOI, ce rapport R est, par exemple, de l'ordre de 1000. En pratique, pour une technologie donnée, ce rapport peut être obtenu par une phase de caractérisation, par exemple d'une pluralité de circuits.

En outre, dans le circuit 1, la précision de mesure est déterminée par la différence entre les périodes T1 et T0. Plus concrètement, la précision de mesure est égale à 1/Nm.

Une précision de mesure suffisante est, par exemple, obtenue lorsque Nm est égal sensiblement égal à R. Toutefois, dans d'autres exemples, une précision de mesure où Nm est inférieure à R peut être suffisante. La personne du métier est en mesure de déterminer une précision de mesure cible en fonction de l'application.

Il existe des modèles stochastiques connus de la source d'entropie 100 du circuit 1, par exemple des modèles définissant mathématiquement l'entropie à partir du bruit de phase. Ces modèles stochastiques sont utilisés pour caractériser la source d'entropie 100, et donc le dispositif 1 de génération de nombres aléatoires. Une telle caractérisation est, par exemple, nécessaire en vue de l'obtention d'une certification du dispositif 1, par exemple selon le référentiel AIS20/31.

Toutefois, dans la figure 1, lorsqu'un front du signal S1 se produit pendant une durée ou temps de mise en place ("setup time" en anglais) précédant un front du signal S0 déclenchant l'échantillonnage du signal S1 par la bascule 102, ou pendant une durée ou temps de maintien ("hold time" en anglais) suivant un front du signal S0 déclenchant l'échantillonnage du signal S1 par la bascule 102, la bascule 102 peut se retrouver dans un état métastable et la sortie Beat de la bascule 102, c'est à dire l'échantillon fourni par la bascule 102, peut alors prendre une valeur fausse, qui ne correspond pas à la valeur du signal S1 au moment du front du signal S0 déclenchant l'échantillonnage. Ce phénomène de métastabilité, bien qu'il serve de source d'entropie dans des dispositif de génération de nombres aléatoires, n'est pas pris en compte dans les modèles stochastiques connus de la source d'entropie 100.

Il en résulte qu'une implémentation matérielle de la source d'entropie 100, qui exprime du bruit de métastabilité en plus du bruit de phase, a un fonctionnement qui s'éloigne de son modèle stochastique, ce qui n'est pas souhaitable.

Résumé de l'invention

Il existe un besoin de prendre en compte, dans un circuit de génération de nombres aléatoires de type à échantillonnage cohérent d'oscillateur en anneau, des métastabilités pouvant se produire dans la bascule échantillonnant un signal de sortie d'un premier oscillateur en anneau au début de chaque front montant ou descendant d'un signal de sortie d'un deuxième oscillateur identique au premier oscillateur.

Un mode de réalisation pallie tout ou partie des inconvénients des circuit de génération de nombres aléatoires connus de type à échantillonnage cohérent d'oscillateur en anneau.

Un mode de réalisation prévoit un circuit de génération de nombres aléatoires comprenant :

un premier oscillateur en anneau et un deuxième oscillateur en anneau identique au premier, configurés pour fournir respectivement un premier signal périodique et un deuxième signal périodique ;

une première bascule configurée pour échantillonner le premier signal au début de chaque période du deuxième signal ;

un compteur cadencé par le deuxième signal ; et

un circuit de gestion des métastabilités configuré pour :

- supprimer des valeurs de sortie du compteur issues de métastabilités de la première bascule en supprimant les valeurs de sorties du compteur inférieures à un seuil déterminé, et réinitialiser le compteur à chaque front montant et/ou à chaque front descendant d'une sortie de la première bascule, ou

- générer un troisième signal dépourvu de métastabilité à partir d'au moins la sortie de la première bascule, et réinitialiser le compteur à chaque front montant et/ou chaque front descendant du troisième signal.

Selon un mode de réalisation :

le circuit de gestion des métastabilités est configuré pour réinitialiser le compteur à chaque front montant et/ou à chaque front descendant de la sortie de la première bascule ; et

le seuil est déterminé au moins en partie par un temps de mise en place de la première bascule, un temps de maintien de la première bascule et un écart entre une valeur moyenne de la période du premier signal et une valeur moyenne de la période du deuxième signal.

Selon un mode de réalisation, le seuil est déterminé par la formule suivante :

$$\mathrm{Nmin\ =\ (ts\ +\ th)/DT,}$$

avec Nmin le seuil, ts le temps de mise en place, th le temps de maintien et DT l'écart entre la valeur moyenne de la période du premier signal et la valeur moyenne de la période du deuxième signal.

Selon un mode de réalisation, le seuil est déterminé par le temps de mise en place de la première bascule, le temps de maintien de la première bascule, l'écart entre la valeur moyenne de la période du premier signal et la valeur moyenne de la période du deuxième signal, un écart type sur la gigue du premier signal et un écart type sur la gigue du deuxième signal.

Selon un mode de réalisation, le seuil est déterminé par la formule suivante :

$$\mathrm{Nmin\ =\ (ts\ +\ th\ +\ \sigma1)/(DT\ +\ \sigma0),}$$

avec Nmin le seuil, ts le temps de mise en place, th le temps de maintien, DT l'écart entre la valeur moyenne de la période du premier signal et la valeur moyenne de la période du deuxième signal, σ1 l'écart type sur la gigue du premier signal et σ0 l'écart type sur la gigue du deuxième signal.

Selon un mode de réalisation, le circuit de gestion de métastabilité est configuré pour réinitialiser le compteur à chaque front montant et à chaque front descendant de la sortie de la première bascule.

Selon un mode de réalisation, le circuit de gestion des métastabilités est configuré pour réinitialiser le compteur à chaque front montant et/ou chaque front descendant du troisième signal, et pour générer le troisième signal par un vote majoritaire entre la sortie de la première bascule, P premiers échantillons obtenus à chaque période du deuxième signal en échantillonnant le premier signal à P instants successifs retardés par rapport au début de ladite période, et de P deuxièmes échantillons obtenus à chaque période du deuxième signal en échantillonnant au début de ladite période P quatrièmes signaux retardés différemment par rapport au premier signal, P étant un entier supérieur ou égal à 2.

Selon un mode de réalisation, à chaque période du deuxième signal :

les P instants successifs sont retardés par rapport au début de ladite période par des retards égaux respectivement à i*D,
avec D une période temporelle et i un entier allant de 1 à P ; et
les P quatrièmes signaux sont retardés par rapport au premier signal par des retards égaux respectivement à j*D,
avec j un entier allant de 1 à P.

Selon un mode de réalisation, la période temporelle D est au moins en partie déterminée par un temps de mise en place de la première bascule et un temps de maintien de la première bascule.

Selon un mode de réalisation, une valeur de la période temporelle D est choisie de sorte que :
T01m/2 > P*D > ts+th, avec ts le temps de mise en place, th le temps de maintien et T01m une valeur moyenne des périodes des premier et deuxième signaux.

Selon un mode de réalisation, une valeur de la période temporelle D est choisie de sorte que :
T01m/2 > P*D > ts+th+$\sigma$1+$\sigma$0, avec ts le temps de mise en place, th le temps de maintien, T01m une valeur moyenne des périodes des premier et deuxième signaux, $\sigma$1 un écart type sur la gigue du premier signal et $\sigma$0 un écart type sur la gigue du deuxième signal.

Selon un mode de réalisation, le circuit de gestion des métastabilités comprends :

P premiers circuits à retard configurés pour recevoir chacun le premier signal et pour fournir respectivement les P quatrièmes signaux ;
P deuxièmes bascules identiques à la première bascule et configurées pour échantillonner respectivement les P quatrièmes signaux au début de chaque période du deuxième signal de sorte à fournir respectivement les P deuxièmes échantillons ;
P deuxièmes circuits à retard identiques respectivement aux P premiers circuits à retard, et configurés pour recevoir chacun le deuxième signal et fournir respectivement P cinquième signaux retardés différemment par rapport au deuxième signal ; et
P troisièmes bascules identiques à la première bascule et configurées pour échantillonner le premier signal au début de chaque période des P cinquièmes signaux respectivement et fournir les P premiers échantillons ; et
un circuit d'arbitrage configuré pour recevoir les P premiers échantillons, les P deuxième échantillons et la sortie de la première bascule et pour fournir le troisième signal à partir des P premier échantillons, des P deuxième échantillons et de la sortie de la première bascule.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1, décrite précédemment, représente un exemple d'un circuit de génération de nombre aléatoire de type à échantillonnage cohérent d'oscillateur en anneau ;

la figure 2 représente des chronogrammes de deux signaux du circuit de la figure 1 ;

la figure 3 représente un mode de réalisation d'un circuit de génération de nombre aléatoire de type à échantillonnage cohérent d'oscillateur en anneau ;

la figure 4 représente un exemple de distribution de valeurs de sortie d'un compteur du circuit de la figure 1 ;

la figure 5 représente un exemple d'un mode de réalisation d'un circuit de génération de nombre aléatoire de type à échantillonnage cohérent d'oscillateur en anneau ; et

la figure 6 illustre, par des chronogrammes, le fonctionnement du circuit de la figure 5 ; et

la figure 7 représente un autre exemple d'un mode de réalisation d'un circuit de génération de nombre aléatoire de type à échantillonnage cohérent d'oscillateur en anneau.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits connus utilisés dans un dispositif de génération de nombres aléatoire de type COSO pour générer un bit aléatoire à partir d'une sortie N d'un compteur configuré pour compter un nombre de période d'un premier oscillateur pendant une période ou une demi-période d'un signal Beat de sortie d'une bascule échantillonnant un deuxième oscillateur identique au premier à la fréquence du premier oscillateur, n'ont pas été décrits. En effet, les modes de réalisation et variantes décrits ici sont compatible avec ces circuits connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

Il est ici proposé de modifier le dispositif 1 de la figure 1, pour y ajouter un circuit de gestion des métastabilités dans la bascule 102. Ce circuit est configuré pour :

contrôler les réinitialisations du compteur COUNTER, et
supprimer les valeurs N qui sont issues de métastabilités dans la bascule 102, ou directement générer un signal Beat dépourvu de métastabilité à partir au moins de la sortie de la bascule 102.

Le signal Beat est dit dépourvu de métastabilité, par exemple, lorsque les effets d'un état métastable de la bascule 102 sur la valeur du signal Beat ont été supprimés.

Par exemple, le signal Beat dépourvu de métastabilité est généré à partir :

des échantillons du signal S1 obtenus en sortie de la sortie de la bascule 102,
d'échantillons de signaux correspondant à des versions retardées du signal S1, ces échantillonnages étant synchrones de l'échantillonnage du signal S1 par la bascule 102,
d'autres échantillons du signal S1 obtenus à des instants d'échantillonnages décalés dans le temps par rapport aux instants d'échantillonnage du signal S1 par la bascule 102, et
d'un vote majoritaire entre ces échantillons.

De préférence, le circuit de gestion de métastabilité est configuré pour ne pas déséquilibrer la charge vue par la sortie de chacun de oscillateurs R0 et R1 par rapport au cas où ce circuit est omis. Dit autrement, le circuit de gestion de métastabilité est configuré pour ne pas introduire de dissymétries entre la charge vue par l'oscillateur R0 et celle vue par l'oscillateur R1 par rapport au cas où ce circuit est omis. Ainsi, les modèles stochastiques utilisés pour caractériser la source d'entropie restent avantageusement valables.

La figure 2 représente des chronogrammes de deux signaux du circuit de la figure 1. Plus particulièrement, la figure 2 représente les signaux S1 et S0 à un moment où le signal S1 est en avance de phase par rapport au signal S0 (à gauche en figure 2) et à un moment où le signal S1 est en retard de phase par rapport au signal S0 (à droite en figure 2).

Dans la suite de la description, on appelle "front actif" du signal S0, le type de front parmi le type montant et le type descendant, qui provoque un échantillonnage du signal S1 par la bascule 102. Dans l'exemple de la figure 2, les fronts actifs du signal S0 sont les fronts montants, bien qu'un exemple basé sur des fronts actifs descendants soit possible.

En figure 2, le temps de mise en place ts de la bascule 102 et le temps de maintien th de la bascule 102 sont représentés. Le temps ts est la durée précédant chaque front actif du signal S0 pendant laquelle le signal S1 doit avoir une valeur stable, et le temps th est la durée suivant chaque front actif du signal S0 pendant laquelle le signal S1 doit avoir une valeur stable. Si le signal S1 a une valeur stable pendant les temps ts et th, alors la bascule 102 ne présente pas d'état métastable.

Ces temps ts et th définissent, pour chaque front actif du signal S0, une fenêtre temporelle Tmeta pendant laquelle un changement de valeur du signal S1 peut conduire à un état métastable de la bascule 102, c'est à dire à une valeur binaire du signal Beat qui ne correspond pas à la valeur binaire du signal S1 au moment du front actif du signal S0.

On appelle DT l'écart entre la durée moyenne des périodes T0 et T1. Cet écart est par exemple fixé par un control actif comme cela a été décrit à titre d'exemple en relation avec la figure 1. A titre d'exemple alternatif, cet écart est déterminé lors d'une phase de conception des oscillateurs R0 et R1. A titre d'autre exemple alternatif, cet écart est déterminé lors d'une phase de caractérisation post-fabrication du circuit 1.

Lorsque que la phase entre les signaux S1 et S0 est telle qu'un front du signal S1 se produit au début de la durée Tmeta d'un front actif correspondant du signal S0, en connaissant DT, ts et th, il est alors possible de déterminer le nombre Nmin de périodes T0 du signal qui doivent s'écouler avant que la phase entre les signaux S1 et S0 soit telle qu'un front du signal S1 ne se produise plus pendant la durée Tmeta d'un front actif correspondant du signal S0.

Selon un mode de réalisation, ce nombre Nmin est déterminé au moins en partie à partir de l'écart DT et des temps ou durées ts et th de la bascule 102.

Par exemple, le nombre Nmin est déterminé par la relation suivante :

$$\texttt{Nmin = (ts + th)/DT.}$$

A titre d'exemple alternatif, le nombre Nmin est déterminé en tenant compte en outre de la gigue sur les signaux S1 et S0, c'est à dire de l'écart type $\sigma 1$ sur la gigue du signal S1 et de l'écart type $\sigma 0$ sur la gigue du signal S0. Par exemple, dans le cas où le signal S1 est en avance de phase sur le signal S0 (à gauche en figure 2), pour une valeur de phase donnée où les fronts du signal S1 ne se produiraient pas dans les périodes Tmeta des fronts actifs correspondant du signal S0, du fait que la gigue du signal S1 et la gigue du signal S0 peuvent réduire l'écart de phase entre les signaux S1 et S0, des fronts du signal S1 peuvent en pratique se produire pendant la durée Tmeta de fronts actifs correspondant du signal S0. De manière symétrique, dans le cas où le signal S1 est en retard de phase sur le signal S0 (à droite en figure 2), pour une valeur de phase donnée où les fronts du signal S1 ne se produiraient pas dans les périodes Tmeta des fronts actifs correspondant du signal S0, du fait que la gigue du signal S1 et la gigue du signal S0 peuvent réduire l'écart de phase entre les signaux S1 et S0, et des fronts du signal S1 peuvent en pratique se produire pendant la durée Tmeta de fronts actifs correspondant du signal S0. Dans ce cas, pour tenir compte de la gigue des signaux S1 et S0 caractérisée statistiquement par les écarts type respectifs $\sigma 1$ et $\sigma 0$, le nombre Nmin est déterminé par la relation suivante :

$$\texttt{Nmin = (ts + th + } \sigma\texttt{1)/(DT + } \sigma\texttt{0).}$$

Plus généralement, le nombre Nmin de périodes T0 du signal qui doivent s'écouler avant que la phase entre les signaux S1 et S0 soit telle qu'un front du signal S1 ne se produise plus pendant la durée Tmeta d'un front actif correspondant du signal S0 peut être déterminé autrement qu'à partir d'au moins l'écart DT et les durées ts et th de la bascule 102, par exemple de façon empirique, au moyen d'une analyse statistique préalable. Par exemple, une étape de calibration peut être mise en œuvre pour obtenir une distribution statistique des valeurs N, et Nmin peut être choisi de sorte que les valeurs N inférieures à Nmin correspondent à des valeurs de comptage résultant d'une métastabilité.

En pratique, les valeurs N du compteur qui sont inférieures à Nmin sont des valeurs N pour lesquelles des métastabilités dans la bascule ont donné lieu à des oscillations non prévues ou désirées du signal Beat, et donc a des réinitialisation non prévues ou non désirées du compteur COUNTER. Ces valeurs N inférieures à Nmin ne sont donc pas représentatives uniquement du bruit de phase, ou gigue, des signaux S0 et S1, mais aussi de phénomènes de métastabilité dans la bascule 102.

Le circuit de gestion de métastabilité supprime donc les valeurs N qui sont inférieures au seuils Nmin. Dans ce cas, le circuit COUNTER reste réinitialisé par le signal Beat de sortie de la bascule 102 qui est directement transmis par le circuit de gestion de métastabilité sur l'entrée R du circuit COUNTER. Cependant, lorsque des métastabilités conduisent à des oscillations non voulues du signal Beat, donc à une réinitialisation intempestive du circuit COUNTER et à une valeur N inférieure à Nmin, cette valeur N est supprimée par le circuit de gestion des métastabilités. Les valeurs N supprimées ne sont donc pas transmises aux circuits numériques qui utilisent la sortie N du compteur COUNTER pour générer un bit aléatoire.

La figure 3 représente un mode de réalisation d'un circuit 3 de génération de nombre aléatoire de type à échantillonnage cohérent d'oscillateur en anneau, dans le cas où ce circuit 3 comprend un circuit de gestion des métastabilités GM tel que décrit ci-dessus.

Le dispositif 3 comprend de nombreux éléments en commun avec le dispositif 1 de la figure 1 et seules les différences entre ces deux dispositifs sont ici mise en exergue. Ainsi, sauf indication contraire, tout ce qui a été décrit en relation avec la figure 1 s'applique au dispositif 3 de la figure 3.

Le dispositif 3 comprend la source d'entropie 100 qui n'est pas modifiée par rapport à celle de la figure 1. Ainsi, les modèles stochastiques connus utilisés pour modéliser la source 100 afin de caractériser le dispositif 1 s'appliquent à la source d'entropie 100 du dispositif 3 pour caractériser le dispositif 3.

Par rapport au dispositif 1, le dispositif 3 comprend en outre le circuit GM délimité par des traits en pointillés en figure 3.

Le circuit GM est configuré pour supprimer (ou filtrer) les valeurs N qui sont inférieures au seuil Nmin décrit précédemment. Ainsi, le circuit GM reçoit les valeurs N de sortie du circuit COUNTER, et fournit des valeurs Nok correspondantes. Les valeurs Nok sont les valeurs N qui sont supérieures au seuil Nmin. Cette fonction du circuit GM est représentée en figure 3 sous la forme d'un bloc 300 ("N > Nmin" en figure 3). Par exemple, ce bloc 300 comprend un circuit numérique de comparaison de chaque valeur N reçue au seuil Nmin, et un circuit configuré pour fournir une valeur Nok égale à la valeur N reçue uniquement si cette valeur N reçue est strictement supérieure au seuil Nmin. Dit autrement, le bloc 300 correspond par exemple à un filtre numérique passe-haut idéal ayant une valeur Nmin de coupure.

Le circuit GM est en outre configuré pour commander les réinitialisations du compteur COUNTER.

Selon un mode de réalisation, le circuit GM est configuré pour réinitialiser le circuit COUNTER à chaque front montant du signal Beat, ou à chaque front descendant du signal Beat. Dans ce cas, les valeurs N de sortie du compteur COUNTER qui ne sont pas issues de métastabilité correspondent au nombre de périodes T0 du signal S0 pendant une période du signal Beat qui n'a pas été affecté par des métastabilités dans la bascule 102. A titre d'exemple, le circuit GM est configuré pour fournir directement le signal Beat à l'entrée R du circuit COUNTER, cette entrée R étant active sur fronts montants lorsque ce sont les fronts montants du signal Beat qui provoquent une réinitialisation du circuit COUNTER, et sur fronts descendants lorsque ce sont les fronts descendants du signal Beat qui provoquent une réinitialisation du circuit COUNTER.

Selon une variante de réalisation, le circuit GM est configuré pour réinitialiser le circuit COUNTER à chaque front montant du signal Beat et à chaque front descendant du signal Beat. Dans ce cas, les valeurs N de sortie du compteur COUNTER qui ne sont pas issues de métastabilité correspondent au nombre de périodes T0 du signal S0 pendant une demi-période du signal Beat qui n'a pas été affecté par des métastabilités dans la bascule 102. A titre d'exemple, le circuit GM est configuré pour fournir directement le signal Beat à l'entrée R du circuit COUNTER, cette entrée R étant active sur fronts montants et sur fronts descendants, d'où il résulte que chaque front montant et chaque front descendant du signal Beat provoque une réinitialisation du circuit COUNTER.

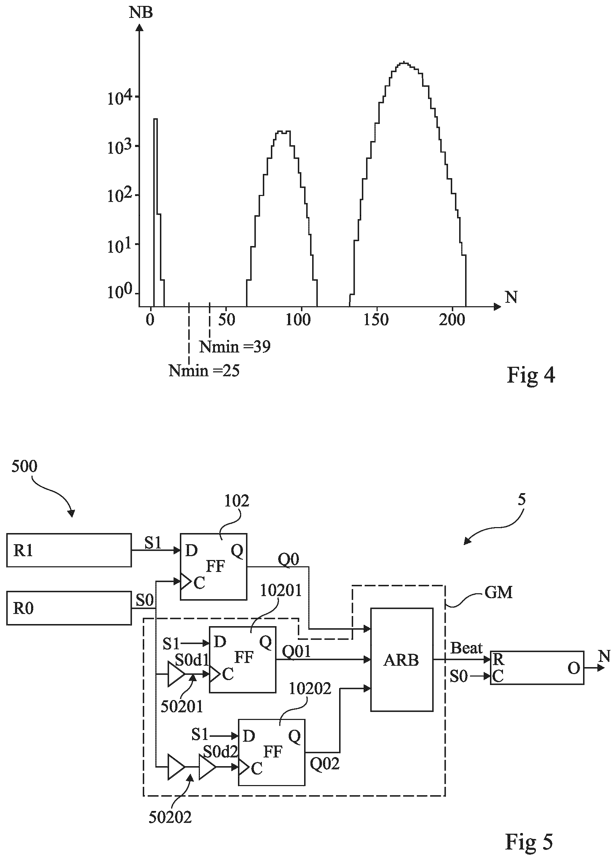

La figure 4 représente un exemple de distribution des valeurs N de sortie du compteur COUNTER du circuit 100 de la figure 1. Dans cet exemple, l'un des oscillateurs R1 et R0 fonctionne avec une fréquence moyenne de 500 MHz, et l'autre des oscillateurs R1 et R0 fonctionne avec une fréquence moyenne de 503 MHz. A titre d'exemple, le seuil Nmin est égal à 25 lorsqu'il est calculé avec la formule Nmin = (ts + th)/DT, et à 39 lorsqu'il est calculé avec la formule Nmin = (ts + th + $\sigma$1)/(DT + $\sigma$0). Dans l'exemple de la figure 4, le circuit COUNTER est réinitialisation uniquement sur les fronts montants du signal Beat, ou, en variante, uniquement sur les fronts descendants du signal Beat.

Les valeurs numériques de la sortie N du compteur COUNTER sont représentées en abscisse, et le nombre NB de sorties N égales à chaque valeur numérique N en abscisse est indiqué en échelle logarithmique en ordonnée.

Un pic 400 représente les valeurs N pour lesquelles le signal Beat a subi des changements de valeurs binaires intempestifs au début d'une période du signal Beat en raison de métastabilité dans la bascule 102. Ces oscillations non désirées du signal Beat au début d'une période du signal Beat provoquent des réinitialisations rapprochées du circuit COUNTER qui sont le résultat de métastabilités dans la bascule 102. Les sorties N correspondant au pic 400 sont bien supprimées par le circuit GM du fait qu'elles correspondent à des valeurs inférieures à Nmin.

Un pic 402 représente les valeurs N pour lesquelles le signal Beat n'a pas subi de métastabilité du début à la fin d'une période du signal Beat. Ces valeurs N sont donc bien représentatives du nombre de périodes T1 du signal S0 pendant une période du signal Beat en l'absence de métastabilités dans la bascule 102, et leurs répartitions autour d'une valeur moyenne est uniquement le résultat de la gigue sur les signaux S0 et S1.

Un pic supplémentaire 404 représente des valeurs N pour lesquelles le signal Beat n'a pas subi de changements de valeurs binaires intempestifs au début d'une période du signal Beat, mais a subi des changements de valeurs binaires intempestifs au milieu de cette période en raison de métastabilités dans la bascule 102, alors que, en l'absence de métastabilité, le signal Beat n'aurait dû commuter qu'une seule fois. Ces oscillations non désirées du signal Beat à la moitié d'une période du signal Beat provoquent des réinitialisations du circuit COUNTER qui sont le résultat de métastabilités dans la bascule 102.

De préférence, pour éviter que les valeurs Nok de sortie du circuit GM de la figure 4 puissent être représentative non seulement de la durée d'une période du signal Beat mais aussi de la durée d'une demi période du signal Beat, le circuit GM et le circuit COUNTER sont configuré pour le circuit COUNTER soit réinitialiser à chaque front montant et à chaque front descendant du signal Beat. Dans ce cas, le circuit COUNTER ensemble le circuit GM fournissent des valeurs Nok qui sont bien égales au nombre de périodes T0 du signal S0 pendant une demi-période du signal Beat en l'absence de métastabilité dans la bascule 102. A titre d'exemple, en additionnant deux valeurs Nok successives, qui correspondent au nombre de périodes T0 du signal S0 dans respectivement deux demi périodes successives d'une période du signal S0, on obtient une valeur représentative du nombre de périodes T0 du signal S0 dans cette période du signal Beat.

Le circuit GM décrit en relation avec les figures 2, 3 et 4 est configuré pour contrôler les réinitialisations du compteur COUNTER et pour supprimer les valeurs N qui sont issues de métastabilités dans la bascule 102.

Un circuit GM configuré pour contrôler les réinitialisations du compteur COUNTER et pour directement générer un signal Beat dépourvu de métastabilité va maintenant être présenté en relation avec les figures 5, 6 et 7.

La figure 5 représente un exemple d'un mode de réalisation d'un circuit 5 de génération de nombre aléatoire de type à échantillonnage cohérent d'oscillateur en anneau, dans le cas où ce circuit 5 comprend un circuit de gestion des métastabilités GM tel que décrit ci-dessus. Le circuit GM est délimité par des traits en pointillé en figure 5.

Le dispositif 5 comprend de nombreux éléments en commun avec le dispositif 1 de la figure 1 et seules les différences entre ces deux dispositifs sont ici mise en exergue. Ainsi, sauf indication contraire, tout ce qui a été décrit en relation avec la figure 1 s'applique au dispositif 5 de la figure 5.

Le dispositif 5 comprend, comme le dispositif 1 de la figure 1, les deux oscillateurs R0 et R1 et la bascule 102 recevant le signal S1 sur son entrée D et le signal S0 sur son entrée C. Toutefois, en figure 5, le signal Beat représentatif de la phase entre les signaux S1 et S0 n'est pas le signal de sortie de la bascule 102, qui est référencé Q0 en figure 5, mais est généré par le circuit GM à partir de cette sortie Q0 de sorte que le signal Beat soit dépourvu de métastabilité. Le circuit GM reçoit donc la sortie Q0 de la bascule 102.

Le circuit 5 comprend le compteur COUNTER. L'entrée D du compteur COUNTER reçoit le signal S0, et l'entrée R du compteur COUNTER reçoit le signal Beat fourni par le circuit GM. Cette entrée R peut être active sur fronts montants uniquement, sur front descendants uniquement, ou sur fronts montants et descendants. La sortie O du circuit COUNTER fournit la valeur N égale au nombre de périodes T0 du signal S0 compté pendant chaque période du signal Beat si l'entrée R est active uniquement sur fronts montants, ou uniquement sur fronts descendants, et au nombre de périodes T0 du signal S0 compté pendant chaque demi-période du signal Beat si l'entrée R est active à la fois sur fronts montants et sur fronts descendants.

Le circuit GM est ici configuré pour générer le signal Beat en mettant en œuvre un vote majoritaire entre :

- la sortie Q0 de la bascule 102, c'est à dire l'échantillon disponible en sortie Q de la bascule 102 ; et
- P échantillons Q0i, avec P un entier strictement supérieur à 2 et i un indice entier allant de 1 à P, obtenus à chaque période du signal S0 en échantillonnant le signal à P instants successifs retardés par rapport au début de la période du signal S0, c'est à dire retardés par rapport à l'instant d'échantillonnage du signal S1 par la bascule 102.

En figure 5, P est égal à 2, et le circuit GM génère donc, à chaque période du signal S0, un échantillon Q01 et un échantillon Q02, correspondant à deux instants d'échantillonnages successifs retardé par rapport à l'instant d'échantillonnage du signal S1 par la bascule 102.

Selon un mode de réalisation, à chaque période du signal S0, la bascule 102 échantillonne le signal S1 au début de la période, et les P instants d'échantillonnage successifs sont retardés par rapport au début de la période par des retards égaux respectivement à i*D, avec D une période temporelle.

Par exemple, en figure 5, à chaque période du signal S0, la bascule 102 échantillonne le signal S1 au début de la période, et les P=2 instants d'échantillonnage successifs correspondant aux échantillons Q01 et Q02 sont retardés par rapport au début de la période par des retards égaux respectivement à 1*D et à 2*D.

Par exemple, la durée D est au moins en partie déterminée par le temps ts et le temps th de la bascule 102. Par exemple, le plus grand délai égal à P*D est strictement supérieur à une durée d'une fenêtre temporelle dans laquelle des métastabilités peuvent se produire, cette fenêtre étant au moins en partie déterminée par le temps ts et le temps th de la bascule 102, par exemple au moins en partie déterminée par ts+th. En outre, ce plus grand délai égal à P*D est, de préférence inférieur à la demi-période moyenne des oscillateurs R0 et R1.

Par exemple, lorsque la fenêtre temporelle pendant laquelle des métastabilités peuvent se produire est égale à ts+th, la durée D est déterminée uniquement par les temps ts et th, et est choisie de sorte que T01m/2 > P*D > ts+th, avec T01m la valeur moyenne des périodes T0 et T1.

A titre d'exemple alternatif, la valeur D est déterminée par les temps th et ts et, en outre, par la gigue sur le signal S0 et la gigue sur le signal S1. Par exemple, la fenêtre temporelle pendant laquelle des métastabilités peuvent se produire est alors égale à $ts+th+\sigma1+\sigma0$, la durée D est déterminée par la somme $ts+th+\sigma1+\sigma0$, et la durée D est choisie de sorte que $T01m/2 > P*D > ts+th+\sigma1+\sigma0$.

A titre d'exemple, le circuit GM comprend P circuits à retard 5020i (50201 et 50202 dans l'exemple de la figure 5 où P est égal à 2) et P bascules 1020i (10201 et 10202 dans l'exemple de la figure 5 où P est égal à 2), les bascules 1020i étant toutes identiques à la bascule 102. Chaque circuit à retard 5020i reçoit le signal S0 et fournit une version retardée SOdi correspondante de ce signal S0. Par exemple, chaque signal SOdi présente un retard égal à i*D par rapport au signal S0. Chaque bascule 1020i est configurée pour échantillonner le signal S1 au début de chaque période du signal SOdi correspondant. Par exemple, la bascule 1020A, respectivement 10202, est configurée pour échantillonner le signal S1 à chaque début de période du signal S0d1, respectivement S0d2, de sorte à fournir l'échantillon Q0d1, respectivement Q0d2. Par exemple, chaque bascule 1020i reçoit le signal S1 sur son entrée D, le signal SOdi sur son entrée C et fournit le signal ou échantillon Q0di sur sa sortie Q.

Le circuit GM comprend un circuit d'arbitrage ARB configuré pour recevoir les échantillons Q0 et Q0i, et pour fournir le signal Beat correspondant au résultat d'un vote majoritaire entre ces échantillons.

EP 4 671 964 A1

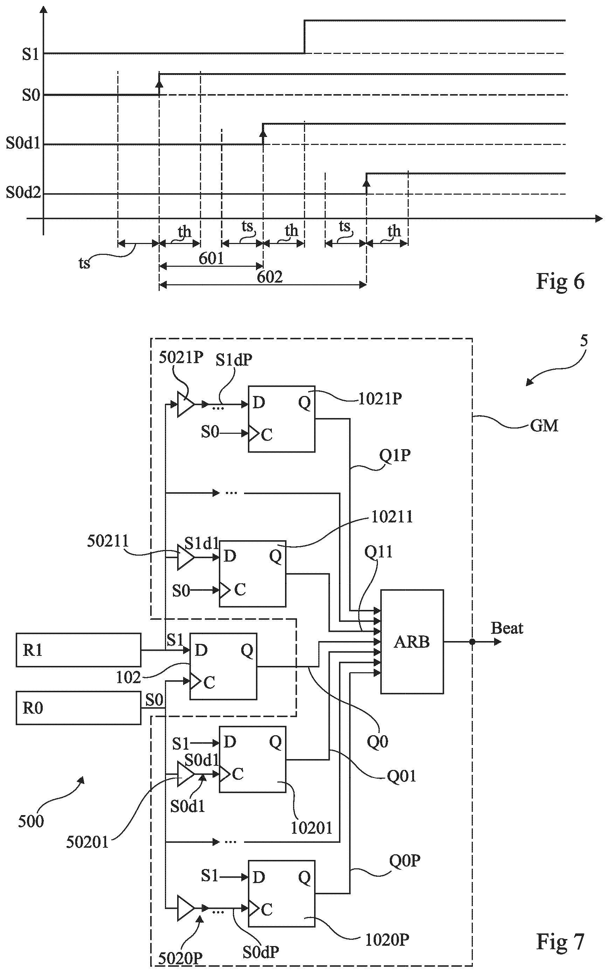

La figure 6 illustre, par des chronogrammes, le fonctionnement du circuit 5 de la figure 5.

Plus particulièrement, la figure 6 représente les chronogrammes des signaux S1, S0, S0d1, et S0d2.

Dans cet exemple, les fronts actifs du signal S0 sont les fronts montants, c'est à dire que chaque période du signal S0 correspond à un front montant de ce signal. Ainsi, dans cet exemple, les fronts actifs des signaux S0d1 et S0d2 provoquant les échantillonnages du signal S1 par les bascules respectives 10201 et 10202 sont aussi les fronts montants de ces signaux, et chaque période du signal S0d1, respectivement S0d2, débute donc par un front montant de ce signal S0d1, respectivement S0d2.

La figure 6 montre le retard 601, par exemple égal à 1*D, du signal S0d1 par rapport au signal S0, et le retard 602, par exemple égal à 2*D, du signal S0d2 par rapport au signal S0.

En outre, en figure 6, les temps ts et th de la bascule 102 autour de chaque front actif du signal S0 sont représentés, les temps ts et th de la bascule 10201 autour de chaque front actif du signal S0d1 sont représentés, et les temps ts et th de la bascule 10202 autour de chaque front actif du signal S0d2 sont représentés.

Comme cela se voit sur la figure 6, un front du signal S0 qui se produit pendant le temps ts ou th d'un front actif d'un des signaux SOdi et S0, à savoir le signal S0d1 dans l'exemple de la figure 6, ne se produit pas pendant les temps ts ou th d'un front correspondant des autres signaux Sd0i et S0, à savoir des signaux S0d2 et S0 dans l'exemple de la figure 6.

Ainsi, même si l'un des échantillons Q0 et Q0i est instable en raison d'un état métastable de la bascule ayant fourni cet échantillon, la valeur du signal Beat résultant du vote majoritaire entre les échantillons Q0 et Q0di sera stable et dépourvue des effets de cet état métastable.

Le tableau Table 1 ci-dessous donne, pour toutes les combinaisons de valeurs des échantillons Q0 et Qdi, la valeur correspondante du signal Beat.

[Table 1]

| Q0 | Q01 | Q02 | Beat |
|----|-----|-----|------|
| 0 | 0 | 0 | 0 |
| 0 | 0 | 1 | 0 |
| 0 | 1 | 0 | X |
| 0 | 1 | 1 | 1 |
| 1 | 0 | 0 | 0 |
| 1 | 0 | 1 | X |
| 1 | 1 | 0 | 1 |
| 1 | 1 | 1 | 1 |

On notera que, en pratique, la combinaison Q0=0, Qd1=1 et Qd2=0 ne peut pas se produire, de même que la combinaison Q0=1, Qd1=0 et Qd2=1.

Dans l'exemple des figures 5 et 6 ci-dessus, P est égal à 2. Toutefois, plus la valeur de P est élevée, plus la confiance dans le vote sera élevée. Ainsi, de préférence, P est choisi supérieur ou égal à 3.

En figure 5, l'ensemble des deux oscillateurs R1 et R0, de la bascule 102 et du circuit GM mettent en œuvre une source d'entropie 500 dans laquelle les effets de la métastabilité de la bascule 102, et, en pratique, des autres bascules 1020i, sont supprimées dans le signal Beat fourni par cette source d'entropie 500. Dans ce cas, la variation de la durée de chaque demi-période ou de chaque période du signal Beat est alors uniquement lié à la gigue des signaux S1 et S0.

Toutefois, pour caractériser la source 500, les modèles stochastiques connus ne sont plus complètement valables. En effet, la prévision du circuit GM comme décrit en figure 5 vient apporter une charge supplémentaire sur la sortie de l'oscillateur R0, sans modifier en conséquence la charge sur la sortie de l'oscillateur R1. Il en résulte que le fonctionnement des deux oscillateurs R0 et R1 n'est plus tout à fait identique, contrairement à ce qui est généralement prévu dans les modèles stochastiques connus.

Ce problème peut être adressé par un circuit GM du type décrit ci-dessous en relation avec la figure 7.

La figure 7 représente un autre exemple d'un mode de réalisation du circuit 5 de génération de nombre aléatoire de type à échantillonnage cohérent d'oscillateur en anneau.

Le dispositif 5 de la figure 7 comprend de nombreux éléments en commun avec le dispositif 5 de la figure 5 et seules les différences entre ces deux dispositifs sont ici mise en exergue. Ainsi, sauf indication contraire, tout ce qui a été décrit en relation avec la figure 5 s'applique au dispositif 5 de la figure 7.

Le dispositif 5 de la figure 7 diffère du dispositif 5 de la figure 5 par son circuit GM.

Le circuit GM est ici configuré pour générer le signal Beat en mettant en œuvre un vote majoritaire entre :

- la sortie Q0 de la bascule 102, c'est à dire l'échantillon disponible en sortie Q de la bascule 102 ;
- P échantillons Q0i (Q01 et Q0P en figure 7), avec P un entier strictement supérieur à 2 et i un indice entier allant de 1 à P, obtenus à chaque période du signal S0 en échantillonnant le signal à P instants successifs retardés par rapport au début de la période du signal S0, c'est à dire retardés par rapport à l'instant d'échantillonnage du signal S1 par la bascule 102 ; et

P échantillons Q1j (Q1d1 et Q1dP en figure 7) obtenus à chaque période du signal S0 en échantillonnant, au début de cette période, P signaux S1dj (S1d1 et S1dP en figure 7) retardés différemment par rapport au signal S1, avec j un entier allant de 1 à P.

Ainsi, le circuit GM peut être mis en œuvre de manière symétrique, c'est à dire de sorte que la charge vue par l'oscillateur R0 sur sa sortie soit la même que la charge vue par l'oscillateur R1 sur sa sortie. Les modèles stochastiques connus permettant de caractériser la source d'entropie 100 (figure 1 ou 2) peuvent être réutilisés pour caractériser la source d'entropie 500 comprenant les oscillateurs R0 et R1, la bascule 102 et le circuit GM.

Selon un mode de réalisation, à chaque période du signal S0, la bascule 102 échantillonne le signal S1 au début de la période, et les P signaux S1i sont retardés par rapport au signal S1 par des retards égaux respectivement à j*D.

Par exemple, en figure 7, à chaque période du signal S0, la bascule 102 échantillonne le signal S1 au début de la période, et à ce même instant d'échantillonnage, chacun des signaux Sldi est échantillonné par le circuit GM.

A titre d'exemple, le circuit GM de la figure 7 comprend, comme le circuit GM de la figure 5, P circuits à retard 5020i (50201 et 5020P dans l'exemple de la figure 7), P bascules 1020i (10201 et 1020P dans l'exemple de la figure 7), P circuits à retard 5021j (50211 et 5021P dans l'exemple de la figure 7), et P bascules 1021j (10211 et 1021P dans l'exemple de la figure 7), les bascules 1020i et 1021j étant toutes identiques à la bascule 102. Chaque circuit à retard 5020i reçoit le signal S0 et fournit une version retardée SOdi correspondante de ce signal S0. Chaque circuit 5021j reçoit le signal S1 et fournit une version retardée S1dj (S1d1 et S1dP en figure 7) correspondante de ce signal. Par exemple, chaque signal SOdi présente un retard égal à i*D par rapport au signal S0, et chaque signal S1dj présente un retard égal à j*D par rapport au signal S1. Dit autrement, les P circuits 5021j sont, par exemple, identiques respectivement aux P circuits 5020i. Chaque bascule 1020i est configurée pour échantillonner le signal S1 au début de chaque période du signal SOdi correspondant. Par exemple, chaque bascule 1020i reçoit le signal S1 sur son entrée D, le signal SOdi sur son entrée C et fournit le signal ou échantillon Q0di sur sa sortie Q. Chaque bascule 1021j est configurée pour échantillonner le signal S1dj correspondant au début de chaque période du signal S0. Par exemple, chaque bascule 1021j reçoit le signal S1dj sur son entrée D, le signal S0 sur son entrée C et fournit le signal ou échantillon Q1dj sur sa sortie Q.

Le circuit GM comprend le circuit d'arbitrage ARB, à la différence que, dans l'exemple de la figure 7, le circuit ARB est configuré pour recevoir les échantillons Q0, Q0i et Q1j, et pour fournir le signal Beat correspondant au résultat d'un vote majoritaire entre ces échantillons.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Par exemple, bien que cela n'ait pas été décrit, la personne du métier pourra prévoir un autre exemple de circuit GM du type de ceux décrits en relation avec les figures 5 à 7, en prévoyant que le signal Beat soit le résultat d'un vote majoritaire uniquement entre l'échantillon Q0 et les échantillons Q1dj, c'est à dire, par exemple, en supprimant les circuits 5020i et 1020i dans le circuit GM de la figure 7 et en adaptant le circuit ARB de ce circuit GM. A titre d'autre exemple, dans les dispositifs 5 des figures 5 et 7, les circuits à retards 5020i et/ou 5021j peuvent être omis, les signaux respectifs SOdi et S1dj correspondant alors à des signaux internes des oscillateurs respectifs R0 et/ou R1. Toutefois, bien qu'un tel exemple soit fonctionnellement identique aux exemples de dispositif 5 décrits en relation avec les figures 5 et 7, sa mise en œuvre nécessite de connecter les entrées des bascules 1020i et/ou 1021j directement à des noeuds internes des oscillateurs respectifs R0 et/ou R1, d'où il résulte que le modèle stochastique de la source d'entropie devra être adapté par rapport aux modèles connus.

Enfin, la mise en oeuvre pratique des modes de réalisation et variantes décrits est à la portée de la personne du métier à partir des indications fonctionnelles données ci-dessus.

## Revendications

1. Circuit (3 ; 5) de génération de nombres aléatoires comprenant :

  un premier oscillateur en anneau (R1) et un deuxième oscillateur en anneau (R0) identique au premier, configurés pour fournir respectivement un premier signal périodique (S1) et un deuxième signal périodique (S0) ;
  une première bascule (102) configurée pour échantillonner le premier signal (S1) au début de chaque période du deuxième signal (S0) ;
  un compteur (COUNTER) cadencé par le deuxième signal (S0) ; et

un circuit (GM) de gestion des métastabilités configuré pour :

- supprimer des valeurs de sortie (N) du compteur issues de métastabilités de la première bascule (102) en supprimant les valeurs de sortie (N) du compteur inférieures à un seuil (Nmin) déterminé, et réinitialiser le compteur (COUNTER) à chaque front montant et/ou à chaque front descendant d'une sortie (Beat) de la première bascule (102), ou
- générer un troisième signal (Beat) dépourvu de métastabilité à partir d'au moins la sortie (Q0) de la première bascule (102), et réinitialiser le compteur (COUNTER) à chaque front montant et/ou chaque front descendant du troisième signal (Beat).

2. Circuit (3) selon la revendication 1, dans lequel :

le circuit (GM) de gestion des métastabilités est configuré pour réinitialiser le compteur à chaque front montant et/ou à chaque front descendant de la sortie (Beat) de la première bascule (102) ; et
le seuil (Nmin) est déterminé au moins en partie par un temps de mise en place (ts) de la première bascule (102), un temps de maintien (th) de la première bascule (102) et
un écart entre une valeur moyenne de la période du premier signal (S1) et une valeur moyenne de la période du deuxième signal (S0).

3. Circuit (3) selon la revendication 2, dans lequel le seuil (Nmin) est déterminé par la formule suivante :

$$Nmin = (ts + th)/DT,$$

avec Nmin le seuil, ts le temps de mise en place, th le temps de maintien et DT l'écart entre la valeur moyenne de la période du premier signal (S1) et la valeur moyenne de la période du deuxième signal (S0).

4. Circuit (3) selon la revendication 2, dans lequel le seuil est déterminé par le temps de mise en place (ts) de la première bascule (102), le temps de maintien (th) de la première bascule (102), l'écart entre la valeur moyenne de la période du premier signal (S1) et la valeur moyenne de la période du deuxième signal (S0), un écart type ($\sigma$1) sur la gigue du premier signal et un écart type ($\sigma$0) sur la gigue du deuxième signal.

5. Circuit (3) selon la revendication 4, dans lequel le seuil est déterminé par la formule suivante :

$$Nmin = (ts + th + \sigma1)/(DT + \sigma0),$$

avec Nmin le seuil, ts le temps de mise en place, th le temps de maintien, DT l'écart entre la valeur moyenne de la période du premier signal (S1) et la valeur moyenne de la période du deuxième signal (S2), $\sigma$1 l'écart type sur la gigue du premier signal et $\sigma$0 l'écart type sur la gigue du deuxième signal.

6. Circuit (3) selon l'une quelconque des revendications 2 à 5, dans lequel le circuit (GM) de gestion de métastabilité est configuré pour réinitialiser le compteur (COUNTER) à chaque front montant et à chaque front descendant de la sortie (Beat) de la première bascule (102).

7. Circuit (5) selon la revendication 1, dans lequel le circuit (GM) de gestion des métastabilités est configuré pour réinitialiser le compteur (COUNTER) à chaque front montant et/ou chaque front descendant du troisième signal (Beat), et pour générer le troisième signal (Beat) par un vote majoritaire entre la sortie (Q0) de la première bascule (102), P premiers échantillons (Q01, Q02, Q0P) obtenus à chaque période du deuxième signal (S0) en échantillonnant le premier signal (S1) à P instants successifs retardés par rapport au début de ladite période, et de P deuxièmes échantillons (Q11, Q1P) obtenus à chaque période du deuxième signal (S0) en échantillonnant au début de ladite période P quatrièmes signaux (S1d1, S1dP) retardés différemment par rapport au premier signal (S1), P étant un entier supérieur ou égal à 2.

8. Circuit (5) selon la revendication 7, dans lequel, à chaque période du deuxième signal (S0) :

les P instants successifs sont retardés par rapport au début de ladite période par des retards égaux respectivement à i*D, avec D une période temporelle et i un entier allant de 1 à P ; et

les P quatrièmes signaux sont retardés par rapport au premier signal (S1) par des retards égaux respectivement à j*D, avec j un entier allant de 1 à P.

9. Circuit (5) selon la revendication 8, dans lequel la période temporelle D est au moins en partie déterminée par un temps de mise en place (ts) de la première bascule (102) et un temps de maintien (th) de la première bascule (102).

10. Circuit (5) selon la revendication 9, dans lequel une valeur de la période temporelle D est choisie de sorte que : T01m/2 > P*D > ts+th, avec ts le temps de mise en place, th le temps de maintien et T01m une valeur moyenne des périodes des premier et deuxième signaux (S0, S1).

11. Circuit (5) selon la revendication 9, dans lequel une valeur de la période temporelle D est choisie de sorte que : T01m/2 > P*D > ts+th+$\sigma$1+$\sigma$0, avec ts le temps de mise en place, th le temps de maintien, T01m une valeur moyenne des périodes des premier et deuxième signaux (S0, S1), $\sigma$1 un écart type sur la gigue du premier signal (S1) et $\sigma$0 un écart type sur la gigue du deuxième signal (S0).

12. Circuit (5) selon l'une quelconque des revendications 8 à 11, dans lequel le circuit (GM) de gestion des métastabilités comprends :

P premiers circuits à retard (50211, 5021P) configurés pour recevoir chacun le premier signal (S1) et pour fournir respectivement les P quatrièmes signaux (S1d1, S1dP) ;

P deuxièmes bascules (10211, 1021P) identiques à la première bascule et configurées pour échantillonner respectivement les P quatrièmes signaux au début de chaque période du deuxième signal (S0) de sorte à fournir respectivement les P deuxièmes échantillons (Q11, Q1P) ;

P deuxièmes circuits à retard (50201, 5020P) identiques respectivement aux P premiers circuits à retard (50211, 5021P), et configurés pour recevoir chacun le deuxième signal (S0) et fournir respectivement P cinquième signaux (S0d1, S0dP) retardés différemment par rapport au deuxième signal (S0) ; et

P troisièmes bascules (10201, 1020P) identiques à la première bascule et configurées pour échantillonner le premier signal (S1) au début de chaque période des P cinquièmes signaux (S0d1, S0dP) respectivement et fournir les P premiers échantillons (Q0d1, Q0dP) ; et

un circuit d'arbitrage (ARB) configuré pour recevoir les P premiers échantillons (Q0d1, Q0dP), les P deuxième échantillons (Q1d1, Q1dP) et la sortie (Q0) de la première bascule (102) et pour fournir le troisième signal (Beat) à partir des P premier échantillons, des P deuxième échantillons et de la sortie de la première bascule.

Fig 1

Fig 2

Fig 3

Fig 4

Fig 5

Fig 6

Fig 7

Europäisches
Patentamt

European
Patent Office

Office européen
des brevets

**RAPPORT DE RECHERCHE EUROPEENNE**

Numéro de la demande

EP 25 18 4521

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | PEETERMANS ADRIAAN ET AL: "A Highly-Portable True Random Number Generator Based on Coherent Sampling", 2019 29TH INTERNATIONAL CONFERENCE ON FIELD PROGRAMMABLE LOGIC AND APPLICATIONS (FPL), IEEE, 8 septembre 2019 (2019-09-08), pages 218-224, XP033649124, DOI: 10.1109/FPL.2019.00041 | 1 | INV. G06F7/58 |
| A | * Section II-IV; figure 1 * | 2-12 | |
| X | PEETERMANS ADRIAAN ET AL: "A Self-Calibrating True Random Number Generator", 2019 29TH INTERNATIONAL CONFERENCE ON FIELD PROGRAMMABLE LOGIC AND APPLICATIONS (FPL), IEEE, 8 septembre 2019 (2019-09-08), page 428, XP033649149, DOI: 10.1109/FPL.2019.00080 | 1 | |
| A | * Section I, II; figure 1 * | 2-12 | DOMAINES TECHNIQUES RECHERCHES (IPC) |
| | | | G06F |
| X | US 2024/201954 A1 (BENEA LICINIUS-POMPILIU [FR] ET AL) 20 juin 2024 (2024-06-20) | 1 | |
| A | * alinéa [0067] - alinéa [0099]; figure 1 * * alinéa [0128] - alinéa [0132]; figure 5 * | 2-12 | |

-/--

Le présent rapport a été établi pour toutes les revendications

| Lieu de la recherche | Date d'achèvement de la recherche | Examinateur |
|---|---|---|
| Munich | 30 septembre 2025 | Prins, Leendert |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 25 18 4521

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | YINGJIE LAO ET AL: "Beat Frequency Detector--Based High-Speed True Random Number Generators", ACM JOURNAL ON EMERGING TECHNOLOGIES IN COMPUTING SYSTEMS (JETC), ACM, 2 PENN PLAZA, SUITE 701 NEW YORK NY 10121-0701 USA, vol. 13, no. 1, 13 avril 2016 (2016-04-13) , pages 1-25, XP058079715, ISSN: 1550-4832, DOI: 10.1145/2866574 | 1 | |
| A | * Section 2-4; figures 2, 3 * ----- | 2-12 | |
| A | US 2022/399883 A1 (FAY BJÖRN [DE]) 15 décembre 2022 (2022-12-15) * alinéas [0013], [0022] - [0024]; figures 1-3 * ----- | 1-12 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 30 septembre 2025 | Prins, Leendert |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.........................................................................
& : membre de la même famille, document correspondant

EPO FORM 1503 03.82 (P04C02)

# EP 4 671 964 A1

## ANNEXE AU RAPPORT DE RECHERCHE EUROPEENNE
## RELATIF A LA DEMANDE DE BREVET EUROPEEN NO.

EP 25 18 4521

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-09-2025

| Document brevet cité au rapport de recherche | Date de publication | Membre(s) de la famille de brevet(s) | Date de publication |
|---|---|---|---|
| US 2024201954 A1 | 20-06-2024 | EP 4390665 A1 | 26-06-2024 |
| | | FR 3143794 A1 | 21-06-2024 |
| | | US 2024201954 A1 | 20-06-2024 |
| US 2022399883 A1 | 15-12-2022 | CN 115459746 A | 09-12-2022 |
| | | EP 4102355 A1 | 14-12-2022 |
| | | US 2022399883 A1 | 15-12-2022 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 3140968
- EP 4354279 A1
- US 20240128957 A1

**Littérature non-brevet citée dans la description**

- **A. PEETERMANS** ; **V. ROZIC** ; **I. VERBAUWHE-DEN**. A Highly-Portable True Random Number Generator Based on Coherent Sampling. *29th International Conference on Field Programmable Logic and Applications (FPL)*, 2019